# EUROPÄISCHE PATENTANMELDUNG

(11) **EP 4 280 647 A1**
(43) Veröffentlichungstag der Anmeldung: **22.11.2023**
(21) Anmeldenummer: 22173744.8
(22) Anmeldetag: 17.05.2022
(51) Int. Cl.: H04W 12/30, H04W 12/50, H04W 12/069, H04L 9/40, H04L 67/12

(54) **PROVISIONIEREN VON ENDGERÄTEN IN FUNKKOMMUNIKATIONSNETZEN**

(71) Anmelder: Siemens Aktiengesellschaft, 80333 München (DE)
(72) Erfinder: Falk, Rainer, 85586 Poing (DE); Fries, Steffen, 85598 Baldham (DE)
(74) Vertreter: Siemens Patent Attorneys

(57) **Zusammenfassung**

Die Erfindung gibt ein Verfahren zum Provisionieren eines Endgeräts (1) in einem Funkkommunikationsnetz (2) an, wobei beim initialen Verbinden des Endgeräts (1) mit dem Funkkommunikationsnetz (2) die Netzwerkadresse eines Provisionier-Servers (3) und eine kryptographische Information zur Authentisierung des Provisionier-Servers (3) dem Endgerät (1) von dem Funkkommunikationsnetz (2) bereitgestellt wird.

Ein zugehöriges System mit einem Endgerät (1), einem Funknetz (2) und einem Provisionier-Server (3) wird ebenfalls angegeben.

## Beschreibung

### GEBIET DER ERFINDUNG

Die Erfindung betrifft ein Verfahren und ein System zum Provisionieren eines Endgeräts in einem Funkkommunikationsnetz, wobei beim initialen Verbinden des Endgeräts mit dem Funkkommunikationsnetz spezifische Daten ausgetauscht werden.

### HINTERGRUND DER ERFINDUNG

5G-basierte Mobilfunknetze werden zukünftig auch in industriellen Netzen, z.B. einer Fabrik oder in einem Fabrikgelände / Campus-Netzwerk, verwendet. Um aus einer Telekommunikationsperspektive derartig neue Deployment-Szenarien zu unterstützen, wurden bereits spezielle Security-Verfahren standardisiert. Diese können alternativ oder zusätzlich zu einer auf SIM-Karten (USIM/UICC) basierten Lösung verwendet werden.

Es müssen dafür jedoch die benötigten Credentials auf einem Mobilgerät (auch als UE oder Industrial 5G Device bezeichnet) eingerichtet (provisioniert; Englisch: Provisioning) werden. Da im industriellen Umfeld unterschiedliche Protokolle und Methoden für das "Credential-Provisioning" eingesetzt werden, ist es nicht sinnvoll, ein einzelnes oder ein spezielles Provisionier-Verfahren für industrielle Anwendungsfälle zu standardisieren.

3GPP TS23.501, Abschnitt 5.30.2.10 Onboarding of UEs for SNPNs, spezifiziert die Netzwerkunterstützung für ein Provisionieren von Credentials. Das Provisioning erfolgt dabei über die User Plane. Dabei sind unterschiedliche Arten beschrieben, wie ein UE die Adresse des Provisioning-Servers PVS erhält (vorkonfiguriert, bei Aufbau PDP-Kontext, durch eine Discovery-Prozedur).

Es ist auch bekannt, einen öffentlichen Schlüssel durch einen sogenannten Fingerprint-Wert (Englisch: public key fingerprint) zu identifizieren, wie beispielsweise unter https://en.wikipedia.org/wiki/Public_key_fingerprint beschrieben ist. Dabei kann ein Nutzer einen Kommunikationspartner manuell durch Prüfen des Fingerprints des von ihm verwendeten öffentlichen Schlüssels mit einem erwarteten Wert authentisieren, ohne dass dafür digitale Zertifikate (z.B. nach X.509) benötigt werden. Dieser Ansatz wird z.B. von dem Protokoll ssh (secure shell) unterstützt.

Außerdem ist ein SubjectKeyIdentifier (SKID, siehe auch https://datatracker.ietf.org/doc/html/rfc5280#section-4.2.1.2) bekannt als Erweiterung zu einem X.509 Zertifikat. Er beinhaltet den Hash des Public Keys, so dass sich der Wert bei der Erneuerung eines Zertifikates für das gleiche Schlüsselpaar nicht ändert.

Bekannt sind auch Enrollment Protokolle wie EST (RFC 7030), CMP (RFC 4210), CMC (RFC 5272), SCEP (RFC 8894), die eine Abfrage der vom Antragsteller zu belegenden Felder (Attribute) in einer Zertifizierungsanfrage ermöglichen. Dabei können einzelne Felder (Attribute) oder auch ein Zertifikatstemplate bereitgestellt werden.

Bekannt ist schließlich auch die Bereitstellung von Werten zur Vorbelegung einer Zertifizierungsanfrage aus dem Draft CMP Updates (https://www.ietf.org/archive/id/draft-ietf-lamps-cmp-updates-13.html#name-new-section-531916-certific). Hierbei wird ermöglicht, Werte für Felder (Attribute), die in einer Zertifizierungsanfrage (CertReqTemplateContent) enthalten sein sollen, abzufragen.

### ZUSAMMENFASSUNG DER ERFINDUNG

Es ist Aufgabe der Erfindung, eine Lösung anzugeben, die das Provisionieren von Endgräten in einem Funkkommunikationsnetz (kurz auch mit "Funknetz" bezeichenbar), insbesondere in einem industriellen Anwendungskontext verwendeten Mobilfunknetz (zum Beispiel 5G), gegenüber dem Stand der Technik verbessert und vereinfacht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Das Grundproblem des Provisionierens (Englisch: Provisioning) besteht darin, dass die Konfiguration auf dem Client (UE, Endgerät) zuerst noch eingerichtet werden muss. Beispielsweise bei 3GPP sind Lösungen spezifiziert, um die Adresse des Provisionier-Servers PVS dem UE bekannt zu machen. Es muss dabei jedoch auch der Provisioning-Vorgang selbst geschützt werden. Dazu ist bekannt, dass die bei 5G verfügbaren User-Plane-Schutzverfahren verwendet werden können. Diese schützen die Kommunikation zum Provisionier-Server jedoch nicht Endezu-Ende und der Schutz ist unter Kontrolle des 5G-Netzes, wobei der PVS jedoch auch unabhängig verwaltet und betrieben werden kann (z.B. auf Shopfloor-Ebene).

In einem Aspekt der Erfindung wird daher vorgeschlagen, dem Client (hier: Endgerät) beim Verbinden mit dem Funkkommunikationsnetz (wie zum Beispiel bei einer Registrierung/Assoziierung bei einem Mobilfunknetzwerk/WLAN-Netzwerk oder beim Aufbau einer Datenübertragungs-Session/PDP-Kontexts) zusätzlich zur Adresse des Provisionier-Servers eine kryptographische Information zur Authentisierung des Provisionier-Servers bereitzustellt (z.B. einen public Key oder den SubjectKeyIdentifier (SKID) oder das Zertifikat des Provisionier-Servers, oder einen davon abhängig gebildeter Prüfwert, insbesondere einen kryptographischen Hash-Wert).

Dies ermöglicht dem Endgerät, den Provisionier-Server zu authentifizieren, ohne dass auf dem Endgerät dazu vorab passende Prüf-Credentials vorliegen müssen. Dies ist insbesondere bei einem Provisionieren in geschlossenen Umgebungen (z.B. in einem OT-Fabriknetz, einem Enterprise-Netzwerk, einem nicht-öffentlichen 5G-Netzwerk oder einem Campus-Netzwerk) vorteilhaft, da dort keine öffentliche, globale PKI-Infrastruktur verwendet wird. (Englisch: OT = operational technology, d.h. Betriebstechnik)

Die Erfindung beansprucht ein Verfahren zum Provisionieren eines Endgeräts in einem Funkkommunikationsnetz, wobei beim initialen Verbinden des Endgeräts mit dem Funkkommunikationsnetz
- die Netzwerkadresse eines Provisionier-Servers und
- eine kryptographische Information zur Authentisierung des Provisionier-Servers
dem Endgerät von dem Funkkommunikationsnetz bereitgestellt wird.

Beim "initialen Verbinden" signalisiert beispielsweise bei 3GGP das Mobilgerät (= Endgerät), dass es sich um einen Onboarding-Netzwerkzugang handelt. "Initial" muss nicht, kann aber auch "erstmalig" bedeuten.

Der Vorteil der Erfindung besteht darin, dass das Provisionieren eines (industriellen) IoT-Geräts / 5G-Devices besser automatisiert werden kann. Ein automatisiertes Provisionieren kann insbesondere auch in unterschiedlichen industriellen Umgebungen erfolgen, bei denen unterschiedliche Provisionier-Protokolle angewendet werden.

Es ist nicht erforderlich, dass eine OT-Security-Infrastruktur zum automatisierten Provisionieren speziell für 5G-Geräte angepasst werden muss. Ein kryptographisch geschütztes Provisionieren wird ermöglicht, ohne dass ein Provisionier-Server sich mit einem digitalen Zertifikat einer globalen, öffentlichen PKI-Infrastruktur authentisieren muss. Dadurch wird ein Provisionieren insbesondere in geschlossenen OT-/Enterprise-Netzen unterstützt. Es könnte sogar selbstsignierte Zertifikate zur Authentisierung des Provisionier-Servers verwendet werden.

In einer Weiterbildung des Verfahrens kann die kryptographische Information den Public Key des Provisionier-Servers, den SubjectKeyIdentifier (SKID) des Provisionier-Servers, das Zertifikat des Provisionier-Servers, oder ein von dem Zertifikat abhängig gebildeter Prüfwert, insbesondere ein kryptographischer Hash-Wert, aufweisen.

In einer Weiterbildung des Verfahrens kann bei dem initialen Verbinden durch das Funkkommunikationsnetz dem Endgerät eine Kennung bereitgestellt werden, wobei die Kennung angibt, welches Provisionier-Protokoll oder welches Provisionier-Verfahren zu verwenden ist.

Weiterhin kann bei dem initialen Verbinden durch das Funkkommunikationsnetz dem Endgerät eine Sicherheitsprotokollkennung bereitgestellt werden, wobei die Sicherheitsprotokollkennung angibt, welches Security-Protokoll oder welches Security-Verfahren zum Schutz des Provisionier-Protokolls durch das Endgerät zu verwenden ist. Es ist möglich, sowohl die Kennung zur Angabe des Provisionier-Protokolls oder des Provisionier-Verfahrens wie auch zusätzlich die Sicherheitsprotokollkennung dem Endgerät bei dem initialen Verbinden bereitzustellen. Die Sicherheitsprotokollkennung kann das Security-Protokoll angeben, über das das Endgerät den Provisionier-Server mittels der bereitgestellten kryptographische Information authentisiert. Weiterhin kann bei dem initialen Verbinden durch das Funkkommunikationsnetz dem Endgerät eine Kryptoalgorithmenkennung bereitgestellt werden, wobei die Kryptoalgorithmenkennung angibt, welcher kryptographische Algorithmus bei der Authentisierung des Provisionier-Servers mittels der vom Funkkommunikationsnetz bereitgestellten kryptographischen Information durch das Endgerät zu verwenden ist. Weiterhin ist es möglich, dass die Bereitstellung der kryptographischen Information zur Authentisierung des Provisionier-Servers durch ein User-Plane-Schutzverfahren oder alternativ ein Control-Plane-Schutzverfahren des Funkkommunikationsnetzes kryptographisch geschützt ist.

In einer Weiterbildung des Verfahrens kann bei dem initialen Verbinden durch das Funkkommunikationsnetz dem Endgerät ein Konfigurationsparameter bereitgestellt werden, wobei der Konfigurationsparameter angibt, wie das Endgerät das Provisionier-Protokoll oder das Provisionier-Verfahren an einen vorgegebenen Anwendungskontext des Endgeräts anpassen soll.

In einer Weiterbildung des Verfahrens kann bei dem initialen Verbinden dem Endgerät durch das Funkkommunikationsnetz eine erste Information bereitgestellt werden, wobei die erste Information angibt, welches Authentisierungscredential oder welches Authentisierungsverfahren durch das Endgerät für die Authentisierung gegenüber dem Provisionier-Server zu verwenden ist.

In einer Weiterbildung des Verfahrens kann bei dem initialen Verbinden dem Endgerät durch das Funkkommunikationsnetz eine zweite Information bereitgestellt werden, wobei die zweite Information angibt, was in dem Endgerät konfiguriert werden soll.

In einer Weiterbildung des Verfahrens kann bei dem initialen Verbinden dem Endgerät durch das Funkkommunikationsnetz eine dritte Information bereitgestellt werden, wobei die dritte Information angibt, wie mehrere Provisionier-Vorgänge durchzuführen sind. Beispielsweise kann dem Endgerät übermittelt werden, welche Credentials und in welcher Reihenfolge diese eingerichtet werden sollen.

In einer Weiterbildung des Verfahrens kann die Funkkommunikationsnetz ein 5G-Netz sein und das Endgerät sich mit einem Knoten des 5G-Netztes initial verbinden.

Die Erfindung beansprucht auch ein System, aufweisend mindesten ein Endgerät und ein Funkkommunikationsnetz, zum Provisionieren des Endgeräts in dem Funkkommunikationsnetz, wobei das Funkkommunikationsnetz eingerichtet ist, beim initialen Verbinden des Endgeräts mit dem Funkkommunikationsnetz
- die Netzwerkadresse eines Provisionier-Servers und
- eine kryptographische Information zur Authentisierung des Provisionier-Servers
dem Endgerät bereitzustellen.

In einer Weiterbildung des Systems kann die kryptographische Information den Public Key des Provisioning-Servers, den SubjectKeyIdentifier (SKID) des Provisionier-Servers, das Zertifikat des Provisionier-Servers, oder ein von dem Zertifikat abhängig gebildeter Prüfwert, insbesondere ein kryptographischer Hash-Wert, aufweisen.

In einer Weiterbildung des Systems kann das Funkkommunikationsnetz eingerichtet sein, bei dem initialen Verbinden dem Endgerät eine Kennung (= Identifier) bereitzustellen, wobei die Kennung angibt, welches Provisionier-Protokoll oder welches Provisionier-Verfahren zu verwenden ist.

In einer Weiterbildung des Systems kann das Funkkommunikationsnetz eingerichtet sein, bei dem initialen Verbinden dem Endgerät einen Konfigurationsparameter bereitzustellen, wobei der Konfigurationsparameter angibt, wie das Endgerät das Provisionier-Protokoll oder das Provisionier-Verfahren an einen vorgegebenen Anwendungskontext des Endgeräts anpassen soll.

In einer Weiterbildung des Systems kann das Funkkommunikationsnetz eingerichtet sein, bei dem initialen Verbinden dem Endgerät eine erste Information bereitzustellen, wobei die erste Information angibt, welches Authentisierungscredential oder welches Authentisierungsverfahren durch das Endgerät für die Authentisierung gegenüber dem Provisionier-Server zu verwenden ist.

In einer Weiterbildung des Systems kann das Funkkommunikationsnetz eingerichtet sein, bei dem initialen Verbinden dem Endgerät eine zweite Information bereitzustellen, wobei die zweite Information angibt, was in dem Endgerät konfiguriert werden soll.

In einer Weiterbildung des Systems kann das Funkkommunikationsnetz eingerichtet sein, bei dem initialen Verbinden dem Endgerät eine dritte Information bereitzustellen, wobei die dritte Information angibt, wie mehrere Provisionier-Vorgänge durchzuführen sind.

In einer Weiterbildung des Systems kann das Funkkommunikationsnetz ein 5G-Netz sein, wobei das 5G-Netz einen Knoten aufweist, und wobei das Endgerät eingerichtet ist, sich mit dem Knoten initial zu verbinden.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: ein Blockschalbild des Systems,
- FIG. 2: ein Ablaufdiagramm des Verfahrens und
- FIG. 3: ein Ablaufdiagramm des modifizierten Verfahrens.

### DETAILLIERTE BESCHREIBUNG DER ERFINDUNG

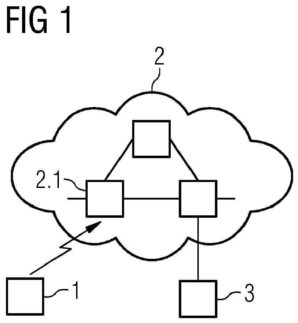

Gemäß dem Blockschaltbild in FIG. 1 wird offenbart, dass einem Endgerät 1 (z.B. einem Mobilfunkgerät) beim initialen Verbinden mit einem Funkkommunikationsnetz 2 (beispielsweise Registrierung/Assoziierung bei einem Mobilfunknetzwerk/WLAN-Netzwerk oder beim Aufbau einer Datenübertragungs-Session/PDP-Kontexts) zusätzlich zu der Netzwerkadresse des Provisionier-Servers 3 eine kryptographische Information zur Authentisierung des Provisionier-Servers 3 bereitgestellt wird (z.B. der public Key oder der SubjectKeyIdentifier (SKID), das Zertifikat des Provisionier-Servers 3, oder ein davon abhängig gebildeter Prüfwert, insbesondere ein kryptographischer Hash-Wert).

Dies ermöglicht dem Endgerät 1, den Provisionier-Server 3 zu authentifizieren, ohne dass auf dem Endgerät 1 vorab passende Prüf-Credentials vorliegen müssen. Das ist insbesondere bei einem Provisionieren in geschlossenen Umgebungen (z.B. einem OT-Fabriknetz, einem Enterprise-Netzwerk, einem nicht-öffentlichen 5G-Netzwerk oder einem Campus-Netzwerk) vorteilhaft, da in denen keine öffentliche, globale PKI-Infrastruktur verwendet wird.

In einem weiteren Aspekt wird offenbart, dem Endgerät 1 einen Identifier (=Kennung) eines Provisionier-Protokolls oder eines Provisionier-Verfahrens bereitzustellt. Dies ist vorteilhaft, da eine Mehrzahl unterschiedlicher Provisionier-Arten angewendet werden kann, z.B. OPC UA, NETCONF, RESTCONF, CMP, SCEP, EST, BRSKI. Das Endgerät 1 oder ein damit verbundenes Industriegerät kann somit automatisch eine Provisionier-Art ermitteln und durchführen.

Dabei ist es möglich, dass das Endgerät 1 die erhaltene Provisionier-Information dem verbundenem Industriegerät vollständig oder teilweise bereitstellt. Dadurch wird ermöglicht, dass das verbundene Industriegerät über das Endgerät 1 ein Provisionieren durchführt. In einer Variante kann bei der Übermittlung der Netzwerkadresse des Provisionier-Servers 3 und der kryptographischen Information zur Authentisierung des Provisionier-Servers 3 angegeben werden, ob diese für ein Provisionieren durch das Endgerät 1 vorgesehen sind oder für ein Provisionieren durch das mit dem Endgerät 1 verbundene Industriegerät. Es ist möglich, eine erste Adresse eines Provisionier-Servers 3 und eine erste kryptographische Information zur Authentisierung des Provisionier-Servers 3 dem Endgerät bereitzustellen, die das Endgerät für ein Provisionieren verwendet, sowie eine zweite Adresse eines zweiten Provisionier-Servers 3 und eine zweite kryptographische Information zur Authentisierung des zweiten Provisionier-Servers 3 dem Endgerät bereitzustellen, die das Endgerät dem verbundenem Industriegerät für ein Provisionieren durch das Industriegerät verwendet. Dies hat den Vorteil, dass sowohl das Endgerät 1 wie auch das damit verbundene Industriegerät gemeinsam und damit konsistent provisioniert werden.

Außerdem kann ein Konfigurationsparameter übermittelt werden, um die ausgewählte Provisionier-Art anzupassen. So kann z.B. bei NETCONF oder RESTCONF ein YANG-Datenmodell referenziert werden, das für das Provisionieren verwendet werden soll. Dies ist vorteilhaft, da bei NETCONF/RESTCONF eine Vielzahl von YANG-Modellen definiert ist, die teilweise standardisiert und teilweise herstellerspezifisch sind. Bei einem Zertifikatsmanagement-Protokoll wie CMP, SCEP, EST kann ein Hinweis zu dem Zertifikatsprofil und/oder den für das Zertifikat zu verwendenden Crypto-Algorithmen/Cipher-Suites (z.B. ob RSA oder ECC verwendet wird, Schlüssellänge) gegeben werden.

Dies ermöglicht eine automatische Anpassung des Endgeräts an die spezielle in einem bestimmten Anwendungskontext verwendete Provisionier-Variante. Die Übermittlung von Zertifikatsprofilen in einem Enrollment-Protokoll ist zwar bekannt (z.B. bei EST und CMP), setzt aber voraus, dass das Endgerät 1 vorab entsprechend konfiguriert ist oder im Kontext des Enrollment-Protokolls (CMP) diese Werte erhält.

Dies ermöglicht dem Endgerät 1, in einem Enrollment-/Provisionier-Protokoll dasjenige Zertifikatsprofil incl. vordefinierter Werte direkt zu übermitteln, das in der konkreten Umgebung, für die das Enrollment/Provisionierung erfolgt, passt. Dazu wird hier einem Endgerät durch das Funknetzwerk die Information zum zu verwendenden Zertifikatsprofil inklusive erwarteter Werte signalisiert. Dies hat den Vorteil, dass die entsprechende Information nicht vorab auf dem Endgerät 1 konfiguriert werden muss oder ein zusätzlichen Datenaustausch durchgeführt werden muss, um ein Enrollment/Provisionieren für die Zielumgebung durchführen zu können.

Weiterhin wird offenbart, dem Endgerät 1 eine erste Information zu dem Authentisierungscredential oder dem Authentisierungsverfahren oder dem bei der Authentisierung zu verwendendem kryptographischen Algorithmus bereitzustellen, dass das Endgerät 1 für die Authentisierung gegenüber dem Provisionier-Server 3 verwenden soll. Dies ist vorteilhaft, wenn eine Mehrzahl von Authentisierungscredentials oder Authentisierungs-Verfahren auf dem Endgerät 1 nutzbar sind.

Weiterhin kann dem Endgerät 1 eine zweite Information bereitgestellt werden, was genau konfiguriert werden soll (z.B. ein Credential für eine Primary Authentication, ein Credential für eine Secondary Authentication, ein Credential für eine Slice Access Authentication, oder eine Netzwerkzugangskonfiguration).

Weiterhin kann dem Endgerät 1 eine dritte Information übermittelt werden, über eine Mehrzahl von durchzuführenden Provisionier-Vorgängen. Insbesondere kann dem Endgerät 1 eine Information übermittelt werden, welche Credentials und in welcher Reihenfolge diese eingerichtet werden sollen. Ebenso kann übermittelt werden, ob es eine Abhängigkeit in der Beantragung gibt (z.B. Enrollment eines generischen Zertifikats, das dann zur Beantragung weiterer Zertifikate genutzt wird).

Die Informationen, die dem Endgerät 1 bereitgestellt werden, können beispielsweise in einem Knoten 2.1 des 5G-Cores hinterlegt sein, z.B. in einer UDM (Unified Data Management) oder AUSF (Authentication Server Function) oder in einem mit dem 5G-Core verbundenen Authentisierungs-Server (AAA-Server, Default Credential Server DCS) gespeichert sein.

Weiterhin ist es möglich, dass die Informationen im 5G-Core über ein Network Exposure Interface des 5G-Cores gesetzt werden können. Dies hat den Vorteil, dass ein OT-Betreiber die entsprechende Information, auf welche Art das Provisionieren des Endgeräts 1 über das 5G-Netzwerk erfolgen soll, auf einfache Art im 5G-Core hinterlegen kann.

Zur Authentisierung des Provisionier-Servers 3 kann ein beliebiges digitales Zertifikat verwendet werden, ohne dass das Endgerät 1 dies vorab validieren können muss. Dadurch kann z.B. auch ein selbstsigniertes Zertifikat zur Authentisierung des Provisionier-Servers 3 verwendet werden, oder ein Zertifikat, das von einer lokalen PKI-Infrastruktur ausgestellt ist. Es ist weiterhin möglich, nur kurzfristig gültige Zertifikate oder ein nur für einen einzelnen Provisionier-Vorgang gültiges Zertifikat zum Authentisieren des Provisionier-Servers 3 auszustellen. Ein solches Zertifikat kann für ein einzelnes Endgerät 1 oder eine Gruppe von Endgeräten 1 ein spezielles Provisionier-Server-Zertifikat ausgestellt und auf dem Provisionier-Server 3 eingerichtet werden. Dadurch kann der Provisionier-Server 3 einfach authentisiert werden, der zweckgebunden für das Provisionieren eines einzelnen bestimmten Endgeräts 1 der einer bestimmten Gruppe von Endgeräten vorgesehen ist.

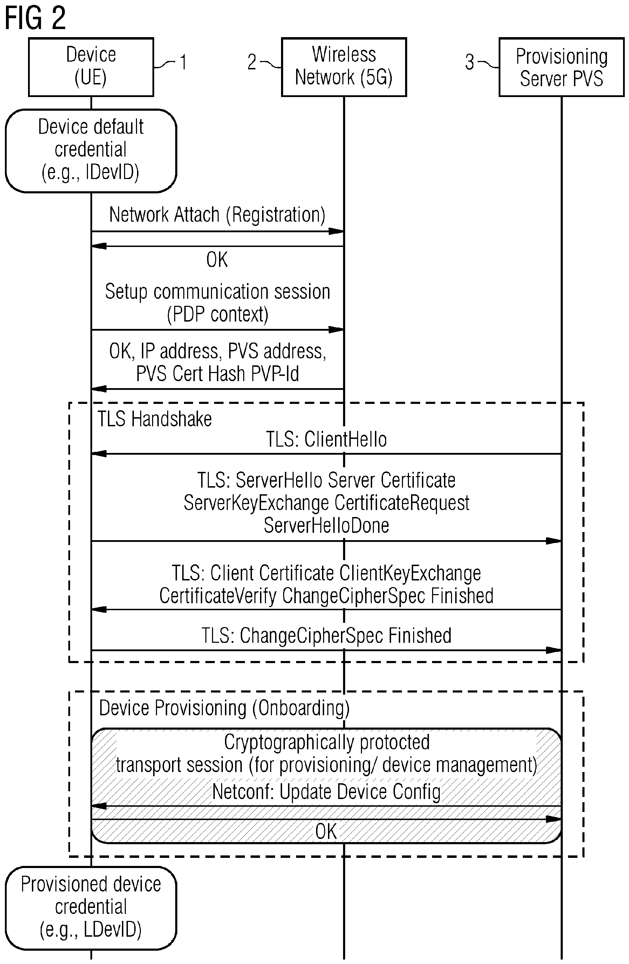

FIG. 2 zeigt ein Ausführungsbeispiel des Verfahrens anhand eines Ablaufdiagramms. Dabei wird das Endgerät 1 beim Aufbau eines für ein Onboarding vorgesehenen PDP-Kontexts zusätzlich zur Adresse des Provisionier-Servers 3 (wie im Stand der Technik bekannt) zusätzlich ein (kryptographischer) Hash-Wert des Provisionier-Server-Zertifikats (PVS Cert Hash) übermittelt. Weiterhin wird dem Endgerät 1 eine erste Kennung PVP-Id übermittelt, die das zu verwendende Provisionier-Protokoll angibt.

Das Endgerät 1 überprüft die Zulässigkeit des vom Provisionier-Server 3 im Rahmen des TLS-Handshakes bereitgestellten, d.h. von ihm für die Authentisierung verwendeten, TLS-Client-Zertifikats des Provisionier-Servers 3 auf Übereinstimmung mit dem beim Aufbau des PDP-Kontexts bereitgestellten PVS-Cert-Hash-Werts. Bei nicht vorliegender Übereinstimmung wird der Provisionier-Vorgang vom Device abgebrochen, d.h. die Verbindung zum Provisionier-Server 3 terminiert.

Weiterhin verwendet das Endgerät 1 die bereitgestellte PVP-Id, um eines von mehreren von ihm unterstützten Provisionier-Protokollen oder Provisionier-Verfahren auszuwählen. In dem Ausführungsbeispiel der FIG. 2 wird NETCONF verwendet. Dabei baut der Provisionier-Server PVS die Verbindung zum Device auf. Das Endgerät 1 kann anhand des übermittelten PVS Cert Hash prüfen, dass tatsächlich nur der zulässige, vorgesehene Provisionier-Server 3 eine TLS-Verbindung zu dem Endgerät 1 oder zu der Endgeräte-Management-Funktionalität des Endgeräts 1 aufbauen kann.

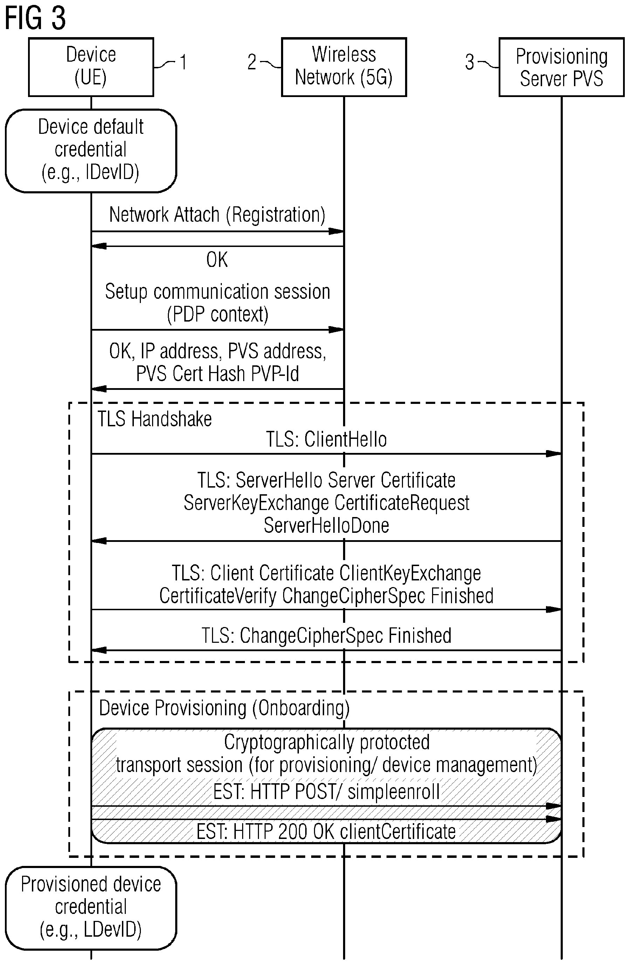

FIG. 3 zeigt ein Ablaufdiagramm eines weiteren Ausführungsbeispiels, bei dem hier EST (enrollment over secure transport) verwendet wird. Über PVP-Id wird dem Endgerät 1 signalisiert, dass EST verwendet werden soll, um das Client-Zertifikat einzurichten. Das Endgerät baut eine TLS-Verbindung zum angegeben Provisionier-Server 3 auf und authentisiert diesen, indem das vom Provisionier-Server 3 verwendete TLS-Server-Zertifikat auf Übereinstimmung mit dem signalisierten (kryptographischer) Hash-Wert des Provisionier-Server-Zertifikats (PVS Cert Hash) überprüft wird. Weitere Details können dem Ablaufdiagramm der FIG. 3 entnommen werden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Ein Verfahren zum Provisionieren eines Endgeräts (1) in einem Funkkommunikationsnetz (2),
wobei beim initialen Verbinden des Endgeräts (1) mit dem Funkkommunikationsnetz (2)
- die Netzwerkadresse eines Provisionier-Servers (3) und
- eine kryptographische Information zur Authentisierung des Provisionier-Servers (3)
dem Endgerät (1) von dem Funkkommunikationsnetz (2) bereitgestellt wird.

2. Das Verfahren nach Anspruch 1, wobei
die kryptographische Information den Public Key des Provisionier-Servers, den SubjectKeyIdentifier (SKID) des Provisionier-Servers (3), das Zertifikat des Provisionier-Servers, oder ein von dem Zertifikat abhängig gebildeter Prüfwert, insbesondere ein kryptographischer Hash-Wert, aufweist.

3. Das Verfahren nach Anspruch 1 oder 2, wobei bei dem initialen Verbinden durch das Funkkommunikationsnetz (2) dem Endgerät (1) eine Kennung bereitgestellt wird, wobei die Kennung angibt, welches Provisionier-Protokoll oder welches Provisionier-Verfahren zu verwenden ist.

4. Das Verfahren nach Anspruch 3, wobei
bei dem initialen Verbinden durch das Funkkommunikationsnetz (2) dem Endgerät (1) ein Konfigurationsparameter bereitgestellt wird, wobei der Konfigurationsparameter angibt, wie das Endgerät (1) das Provisionier-Protokoll oder das Provisionier-Verfahren an einen vorgegebenen Anwendungskontext des Endgeräts (1) anpassen soll.

5. Das Verfahren nach einem der vorhergehenden Ansprüche, wobei bei dem initialen Verbinden dem Endgerät (1) durch das Funkkommunikationsnetz (2) eine erste Information bereitgestellt wird, wobei die erste Information angibt, welches Authentisierungscredential oder welches Authentisierungsverfahren durch das Endgerät (1) für die Authentisierung gegenüber dem Provisionier-Server (3) zu verwenden ist.

6. Das Verfahren nach einem der vorhergehenden Ansprüche, wobei bei dem initialen Verbinden dem Endgerät (1) durch das Funkkommunikationsnetz (2) eine zweite Information bereitgestellt wird, wobei die zweite Information angibt, was in dem Endgerät konfiguriert werden soll.

7. Das Verfahren nach einem der vorhergehenden Ansprüche, wobei bei dem initialen Verbinden dem Endgerät (1) durch das Funkkommunikationsnetz (2) eine dritte Information bereitgestellt wird, wobei die dritte Information angibt, wie mehrere Provisionier-Vorgänge durchzuführen sind.

8. Das Verfahren nach einem der vorhergehenden Ansprüche, wobei
das Funkkommunikationsnetz (2) ein 5G-Netz ist und das Endgerät (1) sich mit einem Knoten (2.1) des 5G-Netztes initial verbindet.

9. Ein System, aufweisend mindesten ein Endgerät (1) und ein Funkkommunikationsnetz (2) zum Provisionieren des Endgeräts (1) in dem Funkkommunikationsnetz (2),
wobei das Funkkommunikationsnetz (2) eingerichtet ist, beim initialen Verbinden des Endgeräts (1) mit dem Funkkommunikationsnetz (2)
- die Netzwerkadresse eines Provisionier-Servers (3) und
- eine kryptographische Information zur Authentisierung des Provisionier-Servers (3)
dem Endgerät (1) bereitzustellen.

10. Das System nach Anspruch 9, wobei
die kryptographische Information den Public Key des Provisionier-Servers (3), den SubjectKeyIdentifier (SKID) des Provisionier-Servers, das Zertifikat des Provisionier-Servers (3), oder ein von dem Zertifikat abhängig gebildeter Prüfwert, insbesondere ein kryptographischer Hash-Wert, aufweist.

11. Das System nach Anspruch 9 oder 10, wobei das Funkkommunikationsnetz (2) eingerichtet ist, bei dem initialen Verbinden dem Endgerät (1) eine Kennung bereitzustellen, wobei die Kennung angibt, welches Provisionier-Protokoll oder welches Provisionier-Verfahren zu verwenden ist.

12. Das System nach Anspruch 11, wobei
das Funkkommunikationsnetz (2) eingerichtet ist, bei dem initialen Verbinden dem Endgerät (1) einen Konfigurationsparameter bereitzustellen, wobei der Konfigurationsparameter angibt, wie das Endgerät (1) das Provisionier-Protokoll oder das Provisionier-Verfahren an einen vorgegebenen Anwendungskontext des Endgeräts (1) anpassen soll.

13. Das System nach einem der Ansprüche 9 bis 12, wobei das Funkkommunikationsnetz (2) eingerichtet ist, bei dem initialen Verbinden dem Endgerät (1) eine erste Information bereitzustellen, wobei die erste Information angibt, welches Authentisierungscredential oder welches Authentisierungsverfahren durch das Endgerät (1) für die Authentisierung gegenüber dem Provisionier-Server (3) zu verwenden ist.

14. Das System nach einem der Ansprüche 9 bis 13, wobei das Funkkommunikationsnetz (2) eingerichtet ist, bei dem initialen Verbinden dem Endgerät (1) eine zweite Information bereitzustellen, wobei die zweite Information angibt, was in dem Endgerät (1) konfiguriert werden soll.

15. Das System nach einem der Ansprüche 9 bis 14, wobei das Funkkommunikationsnetz (2) eingerichtet ist, bei dem initialen Verbinden dem Endgerät (1) eine dritte Information bereitzustellen, wobei die dritte Information angibt, wie mehrere Provisionier-Vorgänge durchzuführen sind.

16. Das System nach einem der Ansprüche 9 bis 15, wobei das Funkkommunikationsnetz (2) ein 5G-Netz ist, wobei das 5G-Netz einen Knoten (2.1) aufweist, und wobei das Endgerät (1) eingerichtet ist, sich mit dem Knoten (2.1) initial zu verbinden.
